# EUROPÄISCHE PATENTSCHRIFT

(11) **EP 0 875 871 B1**
(45) Veröffentlichungstag und Bekanntmachung des Hinweises auf die Patenterteilung: **16.10.2002**
(21) Anmeldenummer: 98100688.5
(22) Anmeldetag: 16.01.1998
(51) Int. Cl.: G07F 19/00, G07F 7/10, G07C 9/00

(54) **Verfahren und Vorrichtung zur Autorisierung in Datenübertragungssystemen**
Authorization method and system in data transfer systems
Méthode et système d'authorisation dans des systèmes de transfert de données

(30) Priorität: 29.04.1997 DE 19718103
(43) Veröffentlichungstag der Anmeldung: 04.11.1998
(73) Patentinhaber: Schmitz, Kim, 80539 München (DE)
(72) Erfinder: Schmitz, Kim, 80539 München (DE)
(74) Vertreter: Freiherr von Gravenreuth, Günter, Dipl.-Ing. (FH)

(56) Entgegenhaltungen:
- EP-A- 0 416 482
- EP-A- 0 745 961
- WO-A-95/19593
- WO-A-96/00485
- US-A- 3 938 091

## Beschreibung

Die Erfindung betrifft ein Verfahren zur Autorisierung in Datenübertragungssystemen, sowie eine Vorrichtung zu dessen Ausführung.

Es ist bekannt, daß beim Telebanking der Benutzer neben seinem permanenten Passwort (?IN) für jede einzelne Transaktion noch zusätzlich eine Transaktionsnummer (TAN) benötigt. Derartige TAN's werden in größeren Blöcken dem Benutzer mit der Post übermittelt. Es besteht daher das Risiko, daß Dritte von derartigen TAN's Kenntnis erlangen und in Verbindung mit dem Passwort einen Mißbrauch vornehmen können. Das Risiko wird dadurch erhöht, daß derartige TAN's faktisch eine zeitlich unbegrenzte Gültigkeit besitzen.

Bekannt sind ferner Call-Back-Systeme, bei denen das angerufene System sich durch einen Rückruf bei einer im Regelfall gespeicherten Nummer vergewissert, daß das anrufende System autorisiert ist und nicht ein fremdes System sich für ein berechtigtes System ausgibt. Der Nachteil der Call-Back-Systeme besteht darin, daß ein unbefugter Benutzer, welcher sich aus einer beliebigen Quelle einen funktionalen Zugang zu dem berechtigten anrufenden System verschafft hat, unter dieser rechtswidrig erlangten Berechtigung problemlos arbeiten kann, da das Call-Back-System nur überprüft, ob es von einem grundsätzlich berechtigten System aus angerufen wurde.

D1 (WO 96 00485 A) offenbart ein Verfahren und eine Vorrichtung zur Autorisierung eines Nutzers hinsichtlich einer in Anspruch zu nehmenden Serviceleistung. Ein hierfür modifizierter Pager berechnet, basierend auf einem Anforderungscode, einem Passwort und einem internen Verschlüsselungsverfahren, einen Antwortcode, welcher vom Service-Nutzer in ein weiteres Terminal eingegeben wird. Nach positiver Überprüfung wird der gewünschte Service für den Nutzer freigeschaltet.

Der Erfindung liegt die Aufgabe zugrunde ein Verfahren und eine Vorrichtung zur Autorisierung in der Datenübertragung zu schaffen, durch die die Sicherheit erhöht wird. Diese Aufgabe wird erfindungsgemäß durch das Verfahren und die Vorrichtung gemäß den unabhängigen Ansprüchen gelöst.

Drahtlose Telekommunikationsgeräte wie beispielsweise Handys oder Pager besitzen oft die Möglichkeit, kurze (alpha-)numerische Nachrichten (z. B. der Short Message Service = SMS-Dienst) zu empfangen und auf ihrem Display anzuzeigen. Die vorliegende Erfindung nutzt diese Möglichkeit, um eine TAN oder ein vergleichbares Paßwort zu übermitteln.

Nach der vorliegenden Erfindung übermittelt der Benutzer über ein Dateneingabegerät seine Identifizierung (User-ID, Paßwort o. ä.) und/oder eine Identifizierungs-Kennung des Dateneingabegeräts zusammen mit einer Aufforderung zur Generierung einer TAN (oder eines vergleichbaren Paßworts) an einen Rechner, welcher den Autorisierungsvorgang übernimmt und nachfolgend kurz Autorisierungsrechner genannt wird. In diesem Autorisierungsrechner wird durch einen Zufallsgenerator eine alphanumerische oder nur numerische TAN (oder eine vergleichbares Paßwort) errechnet oder einer Datei entnommen. Dann wird von dem Autorisierungsrechner parallel zur bestehenden Verbindung mit dem Dateneingabegerät, über einen anderen Übertragungsweg diese TAN (oder ein vergleichbares Paßwort) an einen Empfänger übermittelt. Dieser Empfänger kann beispielsweise
a) ein Funkempfänger mit einem Display oder Monitor wie z. B. ein Handy, ein Pager (z. B. einen Cityruf-Empfänger),
b) eine speziell gestaltete Empfangskarte innerhalb des Dateneingabegerätes, welche über Funk oder eine feste Verdrahtung angesprochen wird,
c) eine Mailbox,
d) ein Telefax- oder
d) ein Sprachausgabegerät wie ein fest instalierter Lautsprecher oder ein (Sprach-)Telefon
sein. Hierzu verfügt der Autorisierungsrechner über die erforderliche(n) Telefon-, Funkruf- oder Faxnummern, E-Mail- oder Netzadresse(n). Die diesbezüglichen Daten sind üblicherweise im Autorisierungsrechner gespeichert. Es ist jedoch möglich, daß der Autorisierungsrechner seinerseits sich diese Daten aus einer Datenbank holt, welche sich auf einem anderen Rechner befindet. Insoweit kann auch der Autorisierungsrechner unter Verwendung des erfindungsgemäßem Verfahrens von sich aus einen Zugriff auf diesen anderen Rechner tätigen.

Der berechtigte Benutzer kann die ihm so übermittelte TAN (oder das vergleichbare Paßwort) manuell in sein Dateneingabegerät eingeben und wieder an den Autorisierungsrechner versenden. Bei automatisierten Verfahren erfolgt erfindungsgemäß eine automatische Übertragung der TAN (oder des vergleichbare Paßworts). Der Autorisierungsrechner überprüft nunmehr die Übereinstimmung zwischen allen (von ihm vergebenen) gültigen TAN's (oder vergleichbaren Paßwörtern) und ermöglicht nach dieser Autorisierungsprüfung eine Freigabe des Datenflusses zwischen dem Dateneingabegerät und einer Empfangseinheit.

Bei der TAN (oder dem vergleichbaren Paßwort) kann es sich um eine nur einmal verwendbare TAN handeln. Es sind jedoch auch andere Begrenzungen wie die Benutzerzeit und/oder die Zahl oder Größe der übertragenen Dateien für die Gültigkeit der TAN (oder des vergleichbaren Paßworts) denkbar.

Nach dem in vorgenannter Weise autorisierten Verbindungsaufbau können nunmehr Daten von dem Dateneingabegerät an die Empfangseinheit (oder umgekehrt; Vollduplex) übermittelt werden.

Es liegt auf der Hand, daß zur zusätzlichen Sicherheit diese Daten auch verschlüsselt werden können.

Sowohl das Dateneingabegerät, als auch der Autorisierungsrechner und die Empfangseinheit können normale (Personal-)Computer sein. Die Erfindung arbeitet plattformunabhängig, d. h. sie ist unabhängig von Prozessortypen, Betriebssystemen und/oder Steuerelektroniken (z. B. der Empfangseinheit) und/oder Input/Output-Einheiten (z. B. des Dateneingabegeräts und der Empfangseinheit) .

Die Sicherheit dieses Systems liegt darin, daß nur bei einer Autorisierung der Geräte eine Datenübertragung von dem Dateneingabegerät an die Empfangseinheit durch den Autorisierungsrechner freigeschaltet wird. Dies wird durch den Einsatz getrennter Übertragungswege zwischen dem Dateingabegerät und dem Autorisierungsrechner einseits und dem Autorisierungsrechner und der TAN-Übertragung andererseits, erreicht. Insoweit unterscheidet sich die Erfindung von Call-Back-Systemen bei denen nur eine Überprüfung zwischen dem Dateneingabegerät und dem Autorisierungsrechner erfolgt.

Das erfindungsgemäße Verfahren ermöglicht verschiedenste Sicherheitsstufen.

Auf dem niedrigsten erfindungsgemäßen Sicherheitsniveau wird in dem Dateneingabegerät als Empfänger ein Funkempfänger beispielsweise in Form einer Steckkarte eingebaut, so daß nur mit diesem konkreten Gerät eine Datenübertragung an die Empfangseinheit möglich ist. Zur Erhöhung dieser Sicherheit kann vorgesehen werden, daß dieser Funkempfänger nur mit einem Benutzer-Identifizierungelement, beispielsweise einer Magnet- oder Chipkarte betrieben werden kann. Das Benutzer-Identifizierungelement kann auch mit grafischen Methoden wie Überprüfung eines Fingerabdruckes oder Bildidentifizierung des Benutzers arbeiten.

Die weitere erfindungsgemäße Sicherheitsstufe besteht darin, daß der Autorisierungsrechner die TAN (oder das vergleichbare Paßwort) an einen Pager oder ein vergleichbares Gerät übermittelt. In diesem Fall erfolgt eine Autorisierung nur dann, wenn das Dateneingabegerät und der Pager im Zugriff derselben Person sind. Nur dann ist es möglich, daß die auf dem Display des Pagers angezeigte TAN (oder ein vergleichbares Paßwort) in das Dateneingabegerät eingegeben und von dort wieder an den Autorisierungsrechner übermittelt wird.

Auf einen Pager übermittelte Daten können bekannterweise jedoch abgehört werden. Eine weitere erfindungsgemäße Sicherheitsstufe kann in der Weise erzielt werden, daß im Autorisierungsrechner und im Pager übereinstimmende Verschlüsselungs-Module im Einsatz sind.

Anstelle des Pagers oder Handys kann auch in erfindungsgemäßer Weise ein anderes Empfangsgerät vorgesehen sein. Dies kann eine Mailbox, ein Telefax oder ein Sprachausgabegerät sein. Als Sprachausgabegerät sind erfindungsgemäß fest installierte Lautsprecher oder die Übertragung der Sprache auf einen definierten Telefonanschluß möglich. Bei den Sprachausgabengeräten erfolgt eine sprachliche Ausgabe der TAN (oder des vergleichbaren Paßworts).

Es liegt auf der Hand, daß auch die Übertragung auf derartige Empfangsgeräte verschlüsselt werden kann.

Wenn anstelle eines Pagers ein Handy, insbesondere ein GSM-Handy, im Einsatz ist, dann kann man infolge der Verschlüsselung der diesbezüglichen Übertragungstechnik erfindungsgemäß auf weitere Verschlüsselungsmechanismen verzichten. In diesem Fall erfolgt die Anzeige der TAN (oder des vergleichbaren Paßworts) auf dem Display des Handys.

Eine weitere erfindungsgemäße Sicherheitsstufe kann dadurch erreicht werden, daß zwischen dem Dateneingabegerät und dem Autorisierungsrechner eine Verbindung nur dann aufgebaut wird, wenn über das Dateneingabegerät ein entsprechendes Passwort übermittelt wird. Dieses Passwort kann erfindungsgemäß eine wesentlich längere zeitliche Gültigkeit besitzen als die TAN.

Eine weitere erfindungsgemäße Sicherheitsstufe kann dadurch erreicht werden, daß bereits zur Benutzung des Dateneingabegerätes ebenfalls ein Passwort erforderlich ist.

Es liegt auf der Hand, daß eine Kombination der vorgenannten Sicherheitsstufen möglich ist.

Die Erfindung ist universell im Bereich der Datenübertragungssysteme einsetzbar. Dies gilt beispielsweise auch für das Internet und Intra-Netze, Local-Area-Networks (LAN), Wide-Area-Networks (WAN) etc..

Das fragliche System ist auch außerhalb der klassischen EDV beispielsweise bei physischen Zugangskontrollen einsetzbar. Der Benutzer gibt hierzu beispielsweise auf einer in Türnähe angebrachten Tastatur (= Dateneingabegerät) sein persönliches Passwort ein. Der Autorisierungsrechner prüft dieses Passwort, ggfs. auch in Verbindung mit der Zugangsberechtigung zu dem konkreten - zur konkreten Zeit - Raum. Wenn das betreffende Passwort (noch) gültig ist, übermittelt der Autorisierungsrechner an ein Handy oder ein für das spezielle Türschließ-System konzepierte, funktional mit einem Pager vergleichbares Gerät, die TAN (oder das vergleichbare Paßwort). Anschließend wird diese TAN (oder das vergleichbare Paßwort) vom Benutzer manuell über die in Türnähe angebrachte Tastatur eingegeben und automatisch an den Autorisierungsrechner weitergeleitet. Nach erfolgreicher Überprüfung erfolgt vom Autorisierungsrechner ein Signal für die Freigabe des Türschließ-Mechanismus. Diese Freigabe kann ggfs. zeitlich begrenzt sein. Die Empfangseinheit kann in diesem Fall in technischer Hinsicht einfachster Natur sein, da sie nur das Signal für die Freigabe des Türschließ-Mechanismus so verarbeiten muß, daß die betreffende Elektro-Mechanik die Türe zum Öffnen freigibt.

So ist es möglich ein System aufzubauen, bei dem unterschiedliche Personen unterschiedliche Berechtigung zur Betretung verschiedener Räume haben.

Die konkreten Anwendungsfelder umfassen, z.B.:
- Rechenzentren
- Flughäfen
- Ministerien
- Zoll
- Grenzübergänge
- Sicherheitsbereiche
- Banken
- Tresore
- Garagen
- Parkhäuser
- Autos

Das gesamte System erhält seine Sicherheit aus der Kombination mehrerer unterschiedlicher Basisprinzipien und Faktoren:
(1) "what-you-have" (die nicht zu duplizierende (GSM-)Chipkarte), also ein physisches Unikat, das nicht verlustfrei weitergegeben werden kann.
(2) "what-you-know" (die PIN der GSM-Chipkarte sowie den eigenen Benutzernamen im Dateneingabegerät und/oder Authentifizierungsserver), also Know-How, das nicht unabsichtlich oder versehentlich weitergegeben werden kann
(3) DES-Verschlüsselung und kryptografische Authentifikation im GSM-Netz selbst, dadurch Resistenz gegen Abhör- und Manipulationsangriffe

Dadurch ist zur Kompromittierung des Systems die Kombination mindestens dreier - jeweils für sich schon sehr unwahrscheinlicher - Ereignisse von nöten:
a) physischer Verlust der (Handy-)Chipkarte, des Pagers oder ein fremder Zugriff auf die Mailbox, das Telefax-oder Sprachausgabegerät,
b) Herausgabe der PIN des Empfängers (z. B. von der Chipkarte oder des Handy) und
c) Kenntnis der übermittelten TAN oder des vergleichbaren Paßwortes.

Ein versehentliches Zusammentreffen dieser Faktoren ist nahezu auszuschließen, zumal auch in diesem Fall der erfolgreiche Angriff auf das System die intime Kenntnis des Zugangsverfahrens und der Benutzer-ID voraussetzt, die bei einem Angriff im Normalfall nicht gegeben ist. Außerdem hat der Nutzer die Möglichkeit, seine Benutzer-ID bei Verlust seiner Chipkarte beim Authentifizierungsserver sofort zu sperren oder sperren zu lassen.

Ein weiterer Vorteil der Abstützung auf GSM besteht darin, daß der Benutzer während des Autorisierungsvorganges jederzeit erreichbar ist, also z.B. bei Zugangsproblemen oder Zweifeln an seiner Identität vom Systembetreuer direkt angerufen werden kann.

Diese Lösung hat den Vorteil, daß sie sehr sicher, kostengünstig und mit herkömmlicher, weit verbreiteter und sicherer Hardware realisierbar ist.

Eine weitere erfindungsgemäße Lösung besteht darin, daß Autorisierungsrechner und Empfangseinheit ein Gerät sind.

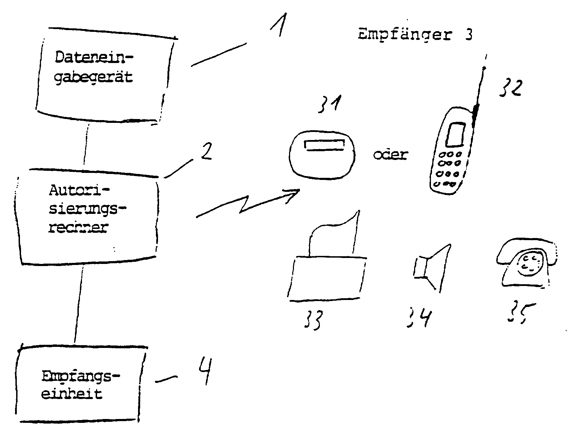

Weitere Vorteile und Anwendungsmöglichkeiten der Erfindung ergeben sich aus dem nachfolgend benannten Ausführungsbeispiel in Verbindung mit der Zeichnung.

Ein berechtigter Benutzer betätigt ein Dateneingabegerät 1). Hierüber sendet er die Aufforderung zur Generierung oder Auswahl und Rücksendung einer TAN (oder eines vergleichbaren Paßwortes) an einen Autorisierungsrechner 2). Der Autorisierungsrechner 2) generiert die TAN (oder ein vergleichbares Paßwort). Dem Autorisierungsrechner 2) ist die Rufnummer oder Datenadresse, z. B. die E-Mail- oder Netz-Adresse des Empfängers (3) des Benutzers des Dateneingabegerätes 1) bekannt. Er sendet an einen Empfänger 3) (nicht näher dargestellt) diese TAN (oder ein vergleichbares Paßwort). Der Empfänger 3) kann ein Pager 31) oder ein Handy 32) sein. Der Empfänger 3) kann jedoch auch die E-Mail-Adresse einer Mailbox (nicht dargestellt), ein Telefax-Gerät 33) oder ein Sprachausgabegerät sein. Das Sprachausgabegerät kann ein fest installierter Lautsprecher 34) oder ein Telefon 35) sein. Der Benutzer ließt diese TAN (oder ein vergleichbares Paßwort) vom Empfänger 3) ab oder hört sie von der Sprachausgabe und gibt sie manuell in das Dateneingabegerät 1) ein. Das Dateneingabegerät 1) übermittelt nunmehr die TAN (oder ein vergleichbares Paßwort) an den Autorisierungsrechner 2). Der Autorisierungsrechner 2) überprüft, ob diese TAN (oder das vergleichbare Paßwort) noch gültig ist. Zu diesem Zweck kann der Autorisierungsrechner so programmiert sein, daß die Gültigkeit der TAN (oder des vergleichbaren Paßworts) zwischen ihrer Versendung an den Empfänger 3) und ihre Übermittlung über das Dateneingabegerät 1) zeitlich begrenzt ist. Die zeitliche Begrenzung kann beispielsweise zwei Minuten betragen. Wenn die TAN (oder das vergleichbare Paßwort) gültig ist, dann stellt der Autorisierungsrechner 2) eine Verbindung zu einer Empfangseinheit 4) her. Nunmehr ist der Benutzer für die Dauer der Aufrechterhaltung dieser Verbindung in der Lage, Daten vom Dateneingabegerät 1) an die Empfangseinheit 4) zu übermitteln und/oder zu empfangen.

Es liegt auf der Hand, daß diese Daten zur weiteren Sicherung verschlüsselt werden können.

Denkbar ist ferner, daß nicht nur die TAN (oder das vergleichbare Paßwort) hinsichtlich ihrer Gültigkeit eine zeitliche Begrenzung hat, sondern daß auch die Dauer der Aufrechterhaltung der Verbindung zwischen dem Dateneingabegerät 1) und der Empfangseinheit 4) zeitlich begrenzt ist. Hierdurch kann vermieden werden, daß eine "Standleitung" zwischen dem Dateneingabegerät 1) und der Empfangseinheit 4) hergestellt wird, was wiederum eine Sicherheitslücke darstellen könnte.

Der Autorisierungsrechner 2) und die Empfangseinheit 4) können ein einziger Computer sein. In diesem Fall erfolgt ein erster Zugriff auf ein Datenverarbeitungsprogramm, welches den Autorisierungsvorgang (Generierung und Übermittlung der TAN) in vorgenannter Weise durchführt. In einem zweiten Schritt erfolgt dann die Datenübertragung.

Es können sogar das Dateneingabegerät (1), der Autorisierungsrechner 2) und die Empfangseinheit 4) ein einziger Computer sein. In diesem Fall erfolgt ein erster Zugriff auf ein Datenverarbeitungsprogramm, welches den Autorisierungsvorgang (Generierung und Übermittlung der TAN an den Empfänger) in vorgenannter Weise durchführt. Erst nach der Autorisierung erhält der Benutzer einen vollen oder auf gewisse Bereiche beschränkten Rechnerzugang.

### Bezugszeichenliste

- Dateneingabegerät: 1)
- Autorisierungsrechner: 2)
- Empfänger: 3)
- Pager: 31)
- Handy: 32)
- Telefax-Gerät: 33)
- Lautsprecher: 34)
- Telefon: 35)
- Empfangseinheit: 4)

## Patentansprüche

1. Verfahren zur Autorisierung in Datenübertragungssystemen unter Verwendung einer Transaktionsnummer (TAN) oder eines vergleichbaren Paßworts mit den Merkmalen
- daß der Benutzer in einem 1. Schritt über ein Dateneingabegerät (1) seine Identifizierung und/oder eine Identifizierungs-Kennung des Dateneingabegeräts (1) zusammen mit der Aufforderung zur Generierung oder zur Auswahl einer TAN oder eines vergleichbaren Paßworts aus einer Datei über eine Datenleitung an einen Autorisierungsrechner (2) sendet,
- daß in einem 2. Schritt der Autorisierungsrechner (2) die TAN oder das vergleichbare Paßwort generiert oder aus einer Datei auswählt,
- daß in einem 3. Schritt der Autorisierungsrechner (3) die TAN oder das vergleichbare Paßwort über eine Funkverbindung an einen Empfänger (3) sendet,
- daß in einem 4. Schritt der Benutzer diese TAN oder das vergleichbare Paßwort von dem Empfänger (3) abliest,
- in einem 5. Schritt manuell in das Dateneingabegerät (1) eingibt,
- daß in einem 6. Schritt diese TAN oder das vergleichbare Paßwort über die Datenleitung wieder an den Autorisierungsrechner (2) übermittelt wird,
- daß in einem 7. Schritt der Autorisierungsrechner (2) die Gültigkeit der TAN oder des vergleichbaren Paßworts prüft, um dann
- in einem 8. Schritt einen Verbindungsaufbau zwischen dem Dateneingabegerät (1) und einer Empfangseinheit (4) herzustellen oder freizuschalten,
**dadurch gekennzeichnet,**
**daß** es sich um eine nur einmal verwendbare TAN oder ein vergleichbares Passwort handelt, welche eine vordefinierte Benutzerzeit haben.

2. Verfahren nach Anspruch 1), **dadurch gekennzeichnet, daß** die Gültigkeit der TAN oder des vergleichbaren Paßworts von einer vordefinierten Anzahl der übertragenen Dateien abhängig ist.

3. Verfahren nach Anspruch 1) oder 2), **dadurch gekennzeichnet, daß** die Gültigkeit der TAN oder des vergleichbaren Paßworts von einer vordefinierten Größe der übertragenen Dateien abhängig ist.

4. Verfahren nach einem oder mehreren der Ansprüche 1) bis 3), **dadurch gekennzeichnet, daß** der Zugriff auf das Dateneingabegerät (1) und/oder der Empfänger (3) und/oder die Empfangseinheit (4) durch ein Passwort geschützt ist.

5. Verfahren nach einem oder mehreren der Ansprüche (1) bis 4), **dadurch gekennzeichnet, daß** die von dem Dateneingabegerät (1) an die Empfangseinheit(4) oder umgekehrt übermittelten Daten verschlüsselt sind.

6. Verfahren nach einem oder mehreren der Ansprüche 1) bis 5), **dadurch gekennzeichnet, daß** die von dem Dateneingabegerät (1) an den Autorisierungsrechner (2) oder umgekehrt übermittelten Daten verschlüsselt sind.

7. Vorrichtung mit Mitteln zur Ausführung der Schritte des Verfahrens nach einem oder mehreren der Ansprüche 1 bis 6).

8. Vorrichtung nach Anspruch 7, **dadurch gekennzeichnet, daß** der Empfänger (3) der nur einmal verwendbaren TAN oder eines vergleichbaren Passwortes, welche eine vordefinierte Benutzerzeit haben, ein Pager (31) ist.

9. Vorrichtung nach Anspruch 7, **dadurch gekennzeichnet, daß** der Empfänger (3) der nur einmal verwendbaren TAN oder eines vergleichbaren Passwortes, welche eine vordefinierte Benutzerzeit haben, ein Handy (32) ist.

10. Vorrichtung nach Anspruch 7), **dadurch gekennzeichnet, daß** der Empfänger (3) der nur einmal verwendbaren TAN oder eines vergleichbares Passwortes, welche eine vordefinierte Benutzerzeit haben, ein Telefax (33) ist.

11. Vorrichtung nach Anspruch 7) **dadurch gekennzeichnet, daß** der Empfänger (3) der nur einmal verwendbaren TAN oder eines vergleichbaren Passwortes, welche eine vordefinierte Benutzerzeit haben, eine E-Mailoder Netzwerkadresse ist.

12. Vorrichtung nach Anspruch 7), **dadurch gekennzeichnet, daß** der Empfänger (3) der nur einmal verwendbaren TAN oder eines vergleichbaren Passwortes, welche eine vordefinierte Benutzerzeit haben, ein Sprachausgabegerät ist.

13. Vorrichtung nach Anspruch 12), **dadurch gekennzeichnet, daß** das Sprachausgabegerät ein Lautsprecher (34) ist.

14. Vorrichtung nach Anspruch 12), **dadurch gekennzeichnet, daß** das Sprachausgabegerät ein Telefon (35) ist.

15. Vorrichtung nach Anspruch 7), **dadurch gekennzeichnet, daß** der Empfänger (3) ein im Dateneingabegerät (1) eingebauter Funkempfänger ist, welcher die nur einmal verwendbare TAN oder ein vergleichbares Passwort, welche eine vordefinierte Benutzerzeit haben, auf dem Display oder Monitor des Dateneingabegeräts (1) ausgibt.

16. Vorrichtung nach Anspruch 15), **dadurch gekennzeichnet, daß** der Funkempfänger ein Benutzer-Identifizierungelement besitzt.

17. Vorrichtung nach Anspruch 16), **dadurch gekennzeichnet, daß** das Benutzer-Identifizierungelement eine Magnet- oder Chipkarte ist.

18. Vorrichtung nach Anspruch 16), **dadurch gekennzeichnet, daß** das Benutzer-Identifizierungelement mit grafischen Einrichtungen zur Überprüfung eines Fingerabdruckes oder zu einer Bildidentifizierung des Benutzers arbeitet.

19. Vorrichtung nach einem oder mehreren der Ansprüche 7) bis 18), **dadurch gekennzeichnet, daß** im Autorisierungsrechner (2) und im Empfänger (3) übereinstimmende Verschlüsselungs-Module vorhanden sind.

20. Vorrichtung nach einem oder mehreren der Ansprüche 7) bis 19), **dadurch gekennzeichnet, daß** die Empfangseinheit (4) ein Türschließ-Mechanismus ist.

21. Vorrichtung nach einem oder mehreren der Ansprüche 7) bis 20), **dadurch gekennzeichnet, daß** der Autorisierungsrechner (2) und die Empfangseinheit (4) in einem Gerät integriert sind.

22. Vorrichtung nach einem oder mehreren der Ansprüche 7) bis 20), **dadurch gekennzeichnet, daß** das Dateneingabegerät, der Autorisierungsrechner (2) und die Empfangseinheit (4) in einem Gerät integriert sind.

## Claims

1. Process of authorization in data communications systems employing a transaction number (TAN) or a comparable password with the following features:
- In a 1st step by means of a data inputting unit (1), the user sends his means of identification and/or an identification signal of the data inputting unit (1) via a data line to an authorization computer (2) together with a request for it to generate a TAN or a comparable password or to select the same from a file.
- In a 2nd step the authorization computer (2) generates the TAN or the comparable password or selects the same from a file.
- In a 3rd step the authorization computer (2) sends the TAN or the comparable password via a radio link to a receiver (3).
- In a 4th step the user reads the said TAN or the comparable password from the receiver (3).
- In a 5th step manual inputting is effected by the user into the data inputting unit (1).
- In a 6th step the said TAN or comparable password is transmitted via the said data line to the authorization computer (2) once more.
- In a 7th step the authorization computer (2) checks the validity of the TAN or comparable password.
- In an 8th step a connection setup is established or released between the data inputting unit (1) and a receiver unit (4).
**characterized by**
the TAN being usable once only or being a comparable password having a predefined user time.

2. Process according to claim 1), **characterized by** the validity of the TAN or comparable password being dependent on a predefined number of transferred files.

3. Process according to claim 1) or 2), **characterized by** the validity of the TAN or comparable password being dependent on a predefined size of the transferred files.

4. Process according to one or several claims 1) to 3), **characterized by** access to the data inputting unit (1) and/or receiver (3) and/or receiver unit (4) being protected by a password.

5. Process according to one or several claims 1) to 4), **characterized by** the data transmitted from the data inputting unit (1) to the receiver unit (4) or vice versa being coded.

6. Process according to one or several claims 1) to 5), **characterized by** the data transmitted from data inputting unit (1) to the authorization computer (2) or vice versa being coded.

7. Device incorporating means for executing the steps of the said process according to one or several claims 1) to 6), **characterized by** the receiver (3) of the once-only usable TAN or a comparable password with predefined user time being a pager (31).

8. Device according to claim 7.

9. Device according to claim 7, **characterized by** the receiver (3) of the once-only usable TAN or a comparable password with predefined user time being a mobile phone (32).

10. Device according to claim 7, **characterized by** the receiver (3) of the once-only usable TAN or a comparable password with predefined user time being a fax machine (33).

11. Device according to claim 7, **characterized by** the receiver (3) of the once-only usable TAN or a comparable password with predefined user time being an email address or network address.

12. Device according to claim 7, **characterized by** the receiver (3) of the once-only usable TAN or a comparable password with predefined user time being a voice output device.

13. Device according to claim 12, **characterized by** the voice output device being a loudspeaker (34).

14. Device according to claim 12, **characterized by** the voice output device being a telephone (35).

15. Device according to claim 7, **characterized by** the receiver (3) being a radio receiving unit incorporated in the data inputting unit (1) outputting the once-only usable TAN or a comparable password with predefined user time on the display or monitor of the said data inputting unit (1).

16. Device according to claim 15, **characterized by** the said radio receiving unit incorporating a user identification element.

17. Device according to claim 16, **characterized by** the said user identification element being a magnetic card or chip card.

18. Device according to claim 16, **characterized by** the said user identification element operating with graphic facilities for checking a fingerprint or image identification of the user.

19. Device according to one or several claims 7) to 8), **characterized by** the presence of coding modules in the authorization computer (2) and receiver (3).

20. Device according to one or several claims 7) to 9), **characterized by** the receiver unit (4) assuming the form of door-locking mechanism.

21. Device according to one or several claims 7) to 20), **characterized by** the authorization computer (2) and receiver unit (4) being incorporated in a unit of equipment.

22. Device according to one or several claims 7) to 20), **characterized by** the data inputting unit, the authorization computer (2) and receiver unit (4) being incorporated in a unit of equipment.

## Revendications

1. Procédure d'autorisation dans des systèmes de transmission de données utilisant un numéro de transaction (TAN) ou mot de passe similaire et possédant les caractéristiques suivantes :
- dans une 1^{ère} étape, et au moyen d'une unité de saisie de données (1), l'utilisateur envoie à un serveur d'autorisation (2) via une ligne de transmission de données son identification et/ou une identification de l'unité de saisie de données (1) accompagnée d'une demande de génération ou de sélection à partir d'un fichier d'un TAN ou d'un mot de passe similaire,
- dans une 2^{ème} étape, le serveur d'autorisation (2) génère ou sélectionne à partir d'un fichier le TAN ou le mot de passe comparable,
- dans une 3^{ème} étape, le serveur d'autorisation (3) envoie par le biais d'un circuit radio le TAN ou le mot de passe comparable à un récepteur (3),
- dans une 4^{ème} étape, l'utilisateur déchiffre sur le récepteur (3) ce TAN ou le mot de passe comparable
- et les entre dans une 5^{ème} étape dans l'unité de saisie de données (1),
- dans une 6^{ème} étape, ce TAN ou le mot de passe comparable est retransmis au serveur d'autorisation via la ligne de transmission de données,
- dans une 7^{ème} étape, le serveur d'autorisation vérifie la validité du TAN ou du mot de passe comparable, pour ensuite
- établir ou libérer dans une 8^{ème} étape une connexion entre l'unité de saisie de données (1) et une unité de réception (4),
**caractérisée par le fait qu'**il s'agit d'un TAN ou mot de passe similaire à utilisation unique et à durée d'utilisation prédéfinie.

2. Procédure selon revendication 1) **caractérisée par le fait que** la validité du TAN ou du mot de passe comparable est fonction d'un nombre prédéfini de fichiers transmis.

3. Procédure selon revendication 1) ou 2) **caractérisée par le fait que** la validité du TAN ou du mot de passe comparable est fonction d'un volume prédéfini de fichiers transmis.

4. Procédure selon l'une ou plusieurs des revendications 1) à 3) **caractérisée par le fait que** l'accès à l'unité de saisie de données (1) et/ou le récepteur (3) et/ou l'unité de réception (4) est protégé au moyen d'un mot de passe.

5. Procédure selon l'une ou plusieurs des revendications 1) à 4) **caractérisée par le fait que** les données transmises de l'unité de saisie de données à l'unité de réception (4), ou dans le sens inverse, sont codées.

6. Procédure selon l'une ou plusieurs des revendications 1) à 5) **caractérisée par le fait que** les données transmises de l'unité de saisie de données au serveur d'autorisation (2), ou dans le sens inverse, sont codées.

7. Installation permettant d'exécuter les différentes étapes de la procédure selon l'une ou plusieurs des revendications 1) à 6) **caractérisée par le fait que** le récepteur (3) du TAN ou mot de passe comparable à utilisation unique et à durée d'utilisation prédéfinie est un pager (31).

8. Installation selon revendication 7) **caractérisée par le fait que** le récepteur (3) du TAN ou mot de passe comparable à utilisation unique et à durée d'utilisation prédéfinie est un pager (31).

9. Installation selon revendication 7) **caractérisée par le fait que** le récepteur (3) du TAN ou mot de passe comparable à utilisation unique et à durée d'utilisation prédéfinie est un téléphone mobile (32).

10. Installation selon revendication 7) **caractérisée par le fait que** le récepteur (3) du TAN ou mot de passe comparable à utilisation unique et à durée d'utilisation prédéfinie est un télécopieur (33).

11. Installation selon revendication 7) **caractérisée par le fait que** le récepteur (3) du TAN ou mot de passe comparable à utilisation unique et à durée d'utilisation prédéfinie est une adresse email ou réseau.

12. Installation selon revendication 7) **caractérisée par le fait que** le récepteur (3) du TAN ou mot de passe comparable à utilisation unique et à durée d'utilisation prédéfinie est un appareil muni d'une sortie vocale.

13. Installation selon revendication 12) **caractérisée par le fait que** l'appareil muni d'une sortie vocale est un haut-parleur (34).

14. Installation selon revendication 12) **caractérisée par le fait que** l'appareil muni d'une sortie vocale est un téléphone (35).

15. Installation selon revendication 7) **caractérisée par le fait que** le récepteur (3) est un récepteur radio intégré dans l'unité de saisie de données (1) qui sort le TAN ou mot de passe comparable à utilisation unique et à durée d'utilisation prédéfinie sur l'affichage ou l'écran de l'unité de saisie de données (1).

16. Installation selon revendication 15) **caractérisée par le fait que** le récepteur radio est équipé d'un élément d'identification de l'utilisateur.

17. Installation selon revendication 16) **caractérisée par le fait que** l'élément d'identification de l'utilisateur est une carte à puce ou magnétique.

18. Installation selon revendication 16) **caractérisée par le fait que** l'élément d'identification de l'utilisateur fonctionne avec du matériel graphique de vérification d'empreinte digitale ou d'identification graphique de l'utilisateur.

19. Installation selon l'une ou plusieurs des revendications 7) à 18) **caractérisée par le fait que** le serveur d'autorisation (2) et le récepteur (3) sont équipés de modules de codages concordants.

20. Installation selon l'une ou plusieurs des revendications 7) à 19) **caractérisée par le fait que** l'unité de réception (4) consiste dans un mécanisme de fermeture de porte.

21. Installation selon l'une ou plusieurs des revendications 7) à 20) **caractérisée par le fait que** e serveur d'autorisation (2) et l'unité de réception (4) sont intégrés dans un même appareil.

22. Installation selon l'une ou plusieurs des revendications 7) à 20) **caractérisée par le fait que** l'unité de saisie de données, le serveur d'autorisation (2) et l'unité de réception (4) sont intégrés dans un même appareil.
